# EUROPEAN PATENT APPLICATION

(11) **EP 4 693 524 A1**
(43) Date of publication of application: **11.02.2026**
(21) Application number: 24784067.1
(22) Date of filing: 20.03.2024
(51) Int. Cl.: H01M 4/70, H01M 4/66, H01M 50/593, H01M 50/46, H01M 50/533, H01M 4/02, H01M 50/172

(54) **BATTERY CELL AND ELECTRICAL DEVICE**

(30) Priority: 07.04.2023 CN 202310365024
(71) Applicant: Ningde Amperex Technology Limited, Ningde, Fujian 352100 (CN)
(72) Inventor: YAN, Jiaxiao, Ningde, Fujian 352100 (CN)
(74) Representative: Kraus & Lederer PartGmbB
(86) International application number: PCT/CN2024/082667
(87) International publication number: WO 2024/207982

(57) **Abstract**

This application discloses a battery cell and an electrical device. The electrical device includes a first electrode plate. The first electrode plate includes a composite current collector, a first active material layer, a protection layer, and a first electrical connector. The composite current collector includes a first section, a second section, and a third section arranged along a first direction. The second section connects the first section and the third section. The first active material layer is connected to the first section. The first active material layer and the composite current collector are arranged along a second direction. The first direction is perpendicular to the second direction. The protection layer is connected to the second section. A first electrical connector is connected to the third section. The protection layer, the first active material layer, and the first electrical connector are disposed on a same side of the composite current collector. Along the first direction, a width W₁ of the protection layer satisfies: 1.0 mm ≤ W₁ ≤ 2.4 mm. The second direction is a thickness direction of the first electrode plate. This increases the headspace of the battery cell, facilitates bending of an electrode terminal, and improves the process yield rate.

## Description

### TECHNICAL FIELD

This application relates to the technical field of energy storage, and in particular, to a battery cell and an electrical device.

### BACKGROUND

Currently, a composite current collector is connected to an electrode terminal by welding an aluminum strip between them. However, this leaves a weld mark between the composite current collector and the aluminum strip. In order to avoid problems such as loss of battery capacity caused by weld breakage and a cold solder joint, the electrode terminal needs to avoid the weld mark position, thereby making the electrode terminal move outward and occupy a part of the headspace of the battery cell. Consequently, it is more difficult to fold the electrode terminal in the headspace, the battery cell is prone to deform, and the electrode terminal is prone to break off due to excessive tension.

### SUMMARY

In view of the situation above, it is necessary to provide a battery cell and an electrical device to increase the headspace of the battery cell and improve the yield rate of connecting electrode terminals.

An embodiment of this application provides a battery cell, including a first electrode plate. The first electrode plate includes a composite current collector, a first active material layer, a protection layer, and a first electrical connector. The composite current collector includes a first section, a second section, and a third section arranged along a first direction. The second section connects the first section and the third section. The first active material layer is connected to the first section. The first active material layer and the composite current collector are arranged along a second direction. The first direction is perpendicular to the second direction. The protection layer is connected to at least the second section to isolate burrs of the second section. The first electrical connector is connected to the third section. The first electrical connector is configured to be connected to an external electrical device. The protection layer, the first active material layer, and the first electrical connector are disposed on a same side of the composite current collector. Along the first direction, a width W₁ of the protection layer located on the second section satisfies: 1.0 mm ≤ W₁ ≤ 2.4 mm. The second direction is a thickness direction of the first electrode plate. By covering this part with the protection layer, the burrs can be isolated, thereby reducing the risk of the burrs penetrating the separator and causing a short circuit. By reducing the width range of the protection layer, this application can increase the distance from a junction between the first electrical connector and the third section to the cell housing, and the distance from a junction between an electrode terminal and the first electrical connector to the cell housing, thereby increasing the headspace of the battery cell, facilitating bending of the electrode terminal, and improving the process yield rate.

Optionally, in some embodiments of this application, along the first direction, the width W₁ of the protection layer satisfies: 1.0 mm ≤ W₁ ≤ 1.5 mm, thereby further increasing the distance from the junction between the first electrical connector and the third section to the cell housing, and the distance from the junction between the electrode terminal and the first electrical connector to the cell housing, and in turn, increasing the headspace of the battery cell, facilitating bending of a tab, and improving the process yield rate.

Optionally, in some embodiments of this application, the protection layer includes an insulation layer. Along the second direction, a thickness h₁ of the insulation layer satisfies: 12 µm ≤ h₁ ≤ 30 µm. The insulation layer is configured to reduce the risk of the burrs penetrating the separator and causing a short circuit between a first electrode plate and a second electrode plate. Along the second direction, a sum S₁ of the thickness of the insulation layer and a thickness of the composite current collector satisfies: 18 µm ≤ S₁ ≤ 45 µm, thereby reducing the space occupied by the insulation layer along the second direction, and increasing the headspace of the battery cell.

Optionally, in some embodiments of this application, the protection layer includes an insulation layer. Along the second direction, a thickness h₁ of the insulation layer satisfies: 12 µm ≤ h₁ ≤ 15 µm. Along the second direction, a sum S₁ of the thickness of the insulation layer and the thickness of the composite current collector satisfies: 18 µm ≤ S₁ ≤ 30 µm, thereby effectively wrapping the burrs, reducing the probability of the burrs penetrating the separator after protruding beyond the insulation layer, further reducing the space occupied by the insulation layer along the second direction, and increasing the headspace of the battery cell.

Optionally, in some embodiments of this application, the protection layer includes a conductive undercoat. Along the second direction, a thickness h₂ of the conductive undercoat satisfies: 2 µm ≤ h₂ < 30 µm; and a sum S₂ of the thickness of the conductive undercoat and a thickness of the composite current collector satisfies: 8 µm ≤ S₂ ≤ 45 µm, thereby effectively wrapping the burrs, reducing the probability of the burrs penetrating the separator after protruding beyond the insulation layer, further reducing the space occupied by the insulation layer along the second direction, and increasing the headspace of the battery cell.

Optionally, in some embodiments of this application, the protection layer includes a conductive undercoat. Along the second direction, the thickness h₂ of the conductive undercoat satisfies: 2 µm ≤ h₂ ≤ 5 µm; and, along the second direction, the sum S₂ of the thickness of the conductive undercoat and the thickness of the composite current collector satisfies: 8 µm ≤ S₂ ≤ 20 µm, thereby effectively wrapping the burrs, reducing the probability of the burrs penetrating the separator after protruding beyond the insulation layer, further reducing the space occupied by the conductive undercoat along the second direction, and increasing the headspace of the battery cell.

Optionally, in some embodiments of this application, along the first direction, a width W₂ of the first electrical connector satisfies: 3 mm ≤ W₂ ≤ 5mm, thereby reducing the space occupied by the first electrical connector along the first direction, and in turn, increasing the distance from the junction between the first electrical connector and the electrode terminal to the cell housing, increasing the headspace of the battery cell, and facilitating bending of the electrode terminal. Along the second direction, a thickness h₃ of the first electrical connector satisfies: 5 µm ≤ h₃ ≤ 20 µm, thereby reducing the space occupied by the first electrical connector along the second direction, increasing the headspace of the battery cell, and facilitating bending of the electrode terminal.

Optionally, in some embodiments of this application, the first electrical connector is welded to the third section to form a welding region. Along the first direction, a width W₃ of the welding region satisfies: 1.8 mm ≤ W₃ ≤ 2 mm. By controlling the width of the welding region, this application increases the space from a welding position between the electrode terminal and the first electrical connector to the cell housing along the first direction, thereby increasing the headspace of the battery cell, and facilitating bending of the electrode terminal. Along the second direction, a thickness S₃ of the welding region satisfies: 18 µm ≤ S₃ ≤ 57 µm, thereby increasing the strength of connection between the first electrical connector and the third section, reducing the space occupied by the welding region along the second direction, increasing the headspace of the battery cell, and facilitating bending of the electrode terminal.

Optionally, in some embodiments of this application, along the second direction, the thickness S₃ of the welding region satisfies: 18 µm ≤ S₃ ≤ 37 µm, thereby further reducing the space occupied by the welding region along the second direction, further increasing the headspace of the battery cell, and facilitating bending of the electrode terminal.

Optionally, in some embodiments of this application, along the second direction, both sides of the first section are coated with the first active material layer. Both sides of the second section are coated with the protection layer. Both sides of the third section are fitted with the first electrical connector.

Optionally, in some embodiments of this application, the protection layer includes an insulation layer. Along the second direction, a sum S₁₁ of thicknesses of the insulation layers on two sides and a thickness of the composite current collector satisfies: 30 µm ≤ S₁₁ ≤ 75 µm. In applying the first active material to both sides of the composite current collector, this setting reduces the space occupied by the insulation layer along the second direction, increases the headspace of the battery cell, and facilitates bending of the electrode terminal.

Optionally, in some embodiments of this application, the protection layer includes a conductive undercoat. Along the second direction, a sum S₂₁ of thicknesses of the conductive undercoats on both sides and a thickness of the composite current collector satisfies: 10 µm ≤ S₂₁ ≤ 75 µm. In applying the first active material to both sides of the composite current collector, this setting further reduces the space occupied by the insulation layer along the second direction, further increases the headspace of the battery cell, and facilitates bending of the electrode terminal.

Optionally, in some embodiments of this application, along the first direction, a difference A in width between the protection layers located on the two sides of the second section satisfies: 0 ≤ A ≤ 0.4 mm.

Optionally, in some embodiments of this application, the first electrical connectors disposed on the two sides of the third section are welded to the third section to form welding regions. Along the first direction, a difference B in width between the welding regions located on the two sides of the third section satisfies: 0 ≤ B ≤ 0.25 mm.

Optionally, in some embodiments of this application, the conductive undercoat is further disposed between the first active material layer and the composite current collector. A resistance R of the conductive undercoat satisfies: 1 mohm ≤ R ≤ 20 mohm. Along the second direction, a thickness h₂₁ of the conductive undercoat located between the first active material layer and the composite current collector satisfies: 1 µm ≤ h₂₁ ≤ 2.5 µm. The conductive undercoat is configured to improve the interface of the composite current collector, increase the bonding force between the composite current collector and the first active material layer, construct a conductive network between the conductive undercoat, the first active material layer, and the composite current collector, and improve the electron transport efficiency.

Optionally, in some embodiments of this application, along the first direction, a width T of the third section satisfies: 1 mm ≤ T ≤ 5 mm, thereby increasing the strength of welding between the first electrical connector and the third section, and improving the reliability of welding between the first electrical connector and the third section.

Optionally, in some embodiments of this application, the insulation layer is made of a material including at least one of inorganic ceramic or a non-conductive organic polymeric substance.

Optionally, in some embodiments of this application, the conductive undercoat is made of a material including at least one of aluminum oxide, silicon oxide, silicon carbide, amorphous carbon, lithium phosphorus oxynitride, or titanium diboride.

An embodiment of this application further provides an electrical device, including the battery disclosed in any one of the embodiments described above.

### BRIEF DESCRIPTION OF DRAWINGS

FIG. 1 is a schematic structural diagram of a battery cell according to some embodiments;
FIG. 2 is a partial cross-sectional schematic view of a first electrode plate according to some embodiments;
FIG. 3 is a schematic structural diagram of a battery cell from a viewing angle along a second direction according to some embodiments;
FIG. 4 is a partial cross-sectional schematic view of a first electrode plate according to some other embodiments;
FIG. 5 is a schematic structural diagram of a battery cell from a viewing angle along a second direction according to some other embodiments;
FIG. 6 is a partial cross-sectional schematic view of a composite current collector according to some embodiments;
FIG. 7 is a partial cross-sectional schematic view of the first electrode plate shown in FIG. 4 according to some other embodiments;
FIG. 8 is a partial cross-sectional schematic view of a first electrode plate according to still some other embodiments;
FIG. 9 is a partial cross-sectional schematic view of a first electrode plate according to yet some other embodiments; and
FIG. 10 is a schematic structural diagram of an electrical device according to some embodiments.

### List of reference numerals:

| | |
|---|---|
| battery cell | 100 |
| cell housing | 101 |
| electrode terminal | 102 |
| first electrode plate | 10 |
| composite current collector | 11 |
| first side | 11a |
| second side | 11b |
| first section | 111 |
| second section | 112 |
| third section | 113 |
| first metal layer | 114 |
| polymer layer | 115 |
| second metal layer | 116 |
| first active material layer | 12 |
| protection layer | 13 |
| first electrical connector | 14 |
| welding region | 14a |
| first direction | X |
| second direction | Y |
| electrical device | 200 |

The following specific embodiments are intended to describe this application in further detail with reference to the drawings.

### DETAILED DESCRIPTION OF EMBODIMENTS

The following specific embodiments are illustrative rather than restrictive, and are intended to provide a basic understanding of this application but not to identify key or decisive elements of this application or to limit the scope of protection. To the extent that no structural conflict exists, various technical features mentioned in different embodiments may be combined in any manner.

A component considered to be "disposed on" another component may be directly disposed on the other component or may be disposed on the other component through an intermediate component. A component considered to be "connected to" another component may be directly connected to the other component or may be connected to the other component through an intermediate component.

Unless otherwise defined, when used for describing the number of components, the term "plurality" herein specifically means that there are two or more components.

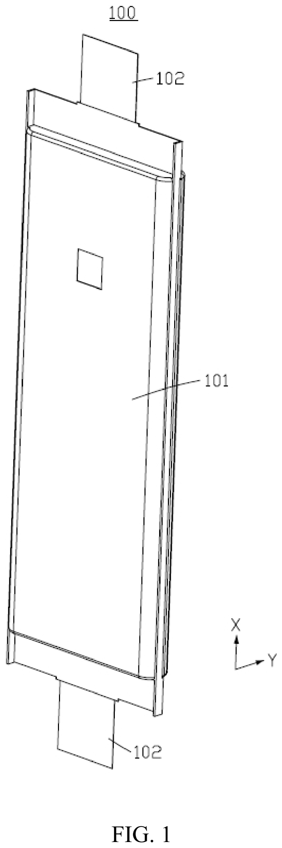

Referring to FIG. 1 to FIG. 5, an embodiment of this application provides a battery cell 100. The battery cell 100 includes a cell housing 101, an electrode assembly (not shown in the drawing), and an electrode terminal 102. The electrode assembly is disposed in the cell housing 101. The electrode terminal 102 is connected to the electrode assembly, and protrudes out of the cell housing 101. In an embodiment, the headspace of the battery cell 100 means a space between one side, from which the electrode terminal 102 protrudes, in the cell housing 101 and the electrode assembly.

In an embodiment, the electrode assembly includes a first electrode plate 10, a second electrode plate (not shown in the drawing), and a separator (not shown in the drawing). The first electrode plate 10, the separator, and the second electrode plate are stacked in sequence to form an electrode assembly unit. A plurality of electrode assembly units are stacked to form an electrode assembly. In some other embodiments, the electrode assembly assumes a jelly-roll structure, and the electrode assembly is formed by stacking the first electrode plate 10, the separator, and the second electrode plate sequentially and then winding the stacked structure.

In some embodiments, the first electrode plate 10 is a negative electrode plate or positive electrode plate, and the second electrode plate is an electrode plate of an opposite polarity to the first electrode plate.

In an embodiment, the battery cell 100 includes two electrode terminals 102. The two electrode terminals 102 are of opposite polarities. Optionally, the two electrode terminals 102 protrude from the cell housing 101 from different sides. Optionally, the two electrode terminals 102 protrude from the cell housing 101 from the same side.

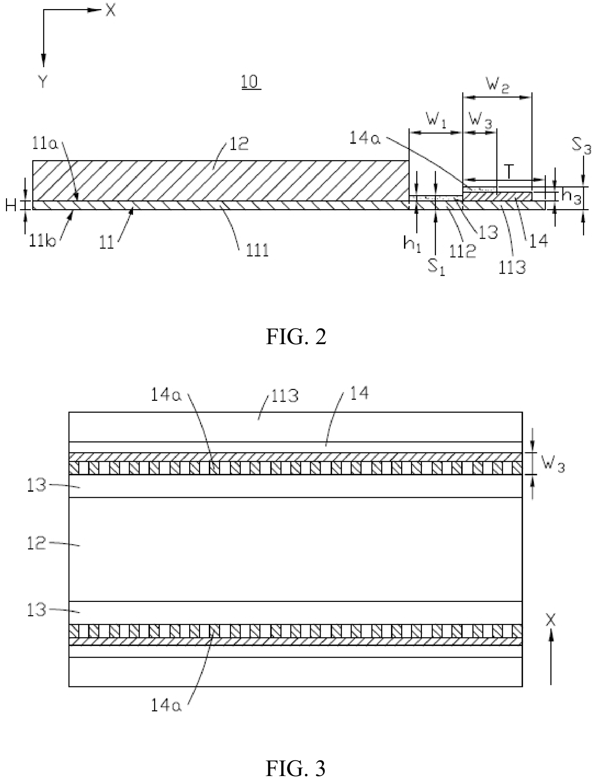

Referring to FIG. 2 to FIG. 5, in an embodiment, the first electrode plate 10 includes a composite current collector 11, a first active material layer 12, a protection layer 13, and a first electrical connector 14. The composite current collector 11 includes a first section 111, a second section 112, and a third section 113 arranged along a first direction X. The second section 112 connects the first section 111 and the third section 113. The composite current collector 11 includes a first side 11a and a second side 11b arranged along a second direction Y. Optionally, the first direction X is a direction in which the electrode terminal 102 protrudes from the cell housing 101, and the second direction Y is a thickness direction of the first electrode plate 10. The first direction X is perpendicular to the second direction Y.

The first active material layer 12 is connected to the first section 111. The protection layer 13 is connected to the second section 112. The first electrical connector 14 is connected to the third section 113. The electrode terminal 102 is connected to the first electrical connector 14. The first active material layer 12, the protection layer 13, and the first electrical connector 14 are all connected to the first side 11a. Along the first direction X, a width W₁ of the protection layer 13 located on the second section 112 satisfies: 1.0 mm ≤ W₁ ≤ 2.4 mm. Burrs are generated on a part, uncoated with the first active material layer 12, of the composite current collector 11, and are prone to penetrate the separator. By covering this part with the protection layer 13 and setting the minimum width of the protection layer 13 to 1.0 mm, the burrs can be isolated, thereby reducing the risk of the burrs penetrating the separator and causing a short circuit. By reducing the width range of the protection layer 13, this application can increase the distance from a junction between the first electrical connector 14 and the third section 113 to the cell housing 101, and the distance from a junction between an electrode terminal 102 and the first electrical connector 14 to the cell housing 101, thereby increasing the headspace of the battery cell 100, facilitating bending of the electrode terminal 102, and improving the process yield rate. Optionally, the width W₁ of the protection layer 13 located on the second section 112 may be any one of 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, or 2.4 mm.

Optionally, along the first direction X, the width W₁ of the protection layer 13 located on the second section 112 satisfies: 1.5 mm < W₁ ≤ 1.8 mm. This setting can increase the distance from the junction between the first electrical connector 14 and the third section 113 to the cell housing 101, and the distance from the junction between the electrode terminal 102 and the first electrical connector 14 to the cell housing 101, thereby increasing the headspace of the battery cell 100, facilitating bending of a tab, improving the process yield rate, further facilitating isolation of the burrs, and reducing the risk of short circuits. Optionally, the width W₁ of the protection layer 13 located on the second section 112 may be any one of 1.6 mm, 1.7 mm, or 1.8 mm.

Optionally, along the first direction X, the width W₁ of the protection layer 13 located on the second section 112 satisfies: 1.0 mm ≤ W₁ ≤ 1.5 mm. This setting can further increase the distance from the junction between the first electrical connector 14 and the third section 113 to the cell housing 101, and the distance from the junction between the electrode terminal 102 and the first electrical connector 14 to the cell housing 101, thereby further increasing the headspace of the battery cell 100, facilitating bending of a tab, and further improving the process yield rate. The width W₁ of the protection layer 13 may be any one of 1.0 mm, 1.1 mm, 1.2 mm, 1.3 mm, 1.4 mm, or 1.5 mm.

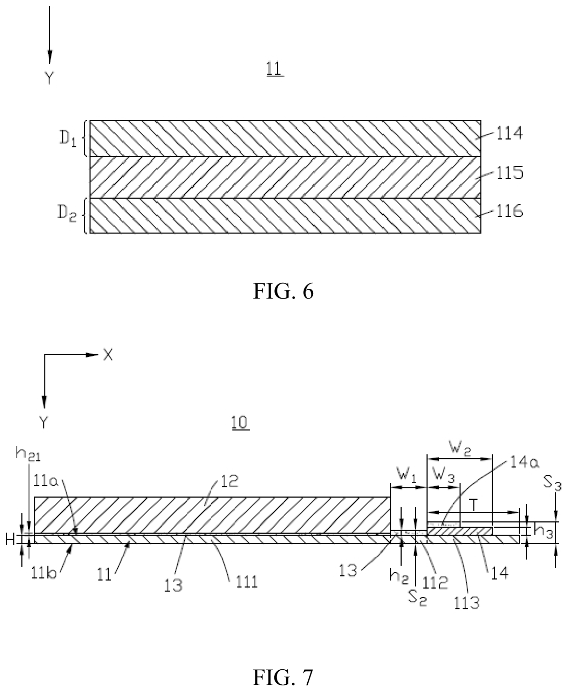

Referring to FIG. 6, in an embodiment, the composite current collector 11 includes a first metal layer 114, a polymer layer 115, and a second metal layer 116. The polymer layer 115 is disposed between the first metal layer 114 and the second metal layer 116. The first active material layer 12 is connected to the first metal layer 114 and/or the second metal layer 116.

In an embodiment, along the second direction Y, the thickness H of the composite current collector 11 satisfies: 6 µm ≤ H ≤ 15 µm. The thickness H of the composite current collector 11 may be any one of 6 µm, 7 µm, 8 µm, 9 µm, 10 µm, 11 µm, 12 µm, 13 µm, 14 µm, or 15 µm.

In an embodiment, the thickness D₁ of the first metal layer 114 satisfies: 0.5 mm ≤ D₁ ≤ 2 mm. The thickness D₁ of the first metal layer 114 may be any one of 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, or 2.0 µm. The thickness H₂ of the second metal layer 116 satisfies: 0.5 mm ≤ D₂ ≤ 2 mm. The thickness D₂ of the second metal layer 116 may be any one of 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, or 2.0 µm.

In an embodiment, along the first direction X, the width T of the third section 113 satisfies: 1 mm ≤ T ≤ 5 mm, thereby increasing the strength of welding between the first electrical connector 14 and the third section 113, and improving the reliability of welding between the first electrical connector 14 and the third section 113. Optionally, the width T of the third section 113 may be any one of 1 mm, 2 mm, 3 mm, 4 mm, or 5 mm.

In an embodiment, the first active material layer 12 is applied onto the first section 111 of the composite current collector 11 by extrusion coating, transfer coating, spray coating, or other means. Optionally, the coating mass of the first active material layer 12 is M, satisfying: 100 mg/1540.25 mm² ≤ M ≤ 400 mg/1540.25 mm². Optionally, the coating mass M of the first active material layer 12 may be any one of 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, or 400, and the unit of M is mg/1540.25 mm².

Referring to FIG. 2, FIG. 3, and FIG. 6, in an embodiment, the protection layer 13 includes an insulation layer. When the first electrode plate 10, the separator, and the second electrode plate are stacked or wound, the insulation layer is located between the separator and the composite current collector 11, and can isolate burrs on the first metal layer 114 or the second metal layer 116 of the composite current collector 11, and reduce the risk of the burrs penetrating the separator and causing a short circuit between the first electrode plate 10 and the second electrode plate. Optionally, the insulation layer is made of a material including at least one of inorganic ceramic or a non-conductive organic polymeric substance. Along the second direction Y, the thickness h₁ of the insulation layer satisfies: 12 µm ≤ h₁ ≤ 30 µm; and a sum S₁ of the thickness of the insulation layer and the thickness of the composite current collector 11 satisfies: 18 µm ≤ S₁ ≤ 45 µm, thereby effectively wrapping the burrs, reducing the probability of the burrs penetrating the separator after protruding beyond the insulation layer, reducing the space occupied by the insulation layer along the second direction Y, and increasing the headspace of the battery cell 100. Optionally, the thickness h₁ of the insulation layer may be any one of 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm. Optionally, S₁ may be 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, or 45 µm.

Optionally, along the second direction Y, the thickness h₁ of the insulation layer satisfies: 15 µm < h₁ ≤ 20 µm; and the sum S₁ of the thickness of the insulation layer and the thickness of the composite current collector 11 satisfies: 21 µm ≤ S₁ ≤ 35 µm, thereby further effectively wrapping the burrs, further reducing the probability of the burrs penetrating the separator after protruding beyond the insulation layer, reducing the space occupied by the insulation layer along the second direction Y, and increasing the headspace of the battery cell 100. Optionally, the thickness h₁ of the insulation layer may be any one of 16 µm, 17 µm, 18 µm, 19 µm, or 20 µm. Optionally, S₁ may be any one of 21 µm, 22 µm, 23 µm, 24 µm, 25 µm, 26 µm, 27 µm, 28 µm, 29 µm, 30 µm, 31 µm, 32 µm, 33 µm, 34 µm, or 35 µm.

Optionally, along the second direction Y, the thickness h₁ of the insulation layer satisfies: 12 µm ≤ h₁ ≤ 15 µm; and the sum S₁ of the thickness of the insulation layer and the thickness of the composite current collector 11 satisfies: 18 µm ≤ S₁ ≤ 30 µm, thereby effectively wrapping the burrs, reducing the probability of the burrs penetrating the separator after protruding beyond the insulation layer, further reducing the space occupied by the insulation layer along the second direction Y, and further increasing the headspace of the battery cell 100. Optionally, the thickness h₁ of the insulation layer may be any one of 12 µm, 13 µm, 14 µm, or 15 µm. Optionally, S₁ may be any one of 18 µm, 19 µm, 20 µm, 21 µm, 22 µm, 23 µm, 24 µm, 25 µm, 26 µm, 27 µm, 28 µm, 29 µm, or 30 µm.

In preparing a specimen, the insulation layer and the active material are applied onto the current collector simultaneously, and the slurry of the insulation layer and the slurry of the active material are output from the same coating port in parallel. The insulation layer is applied by using a customized coating gasket. At the outlet of the gasket, the thickness and width of the active material differ from those of the insulation layer.

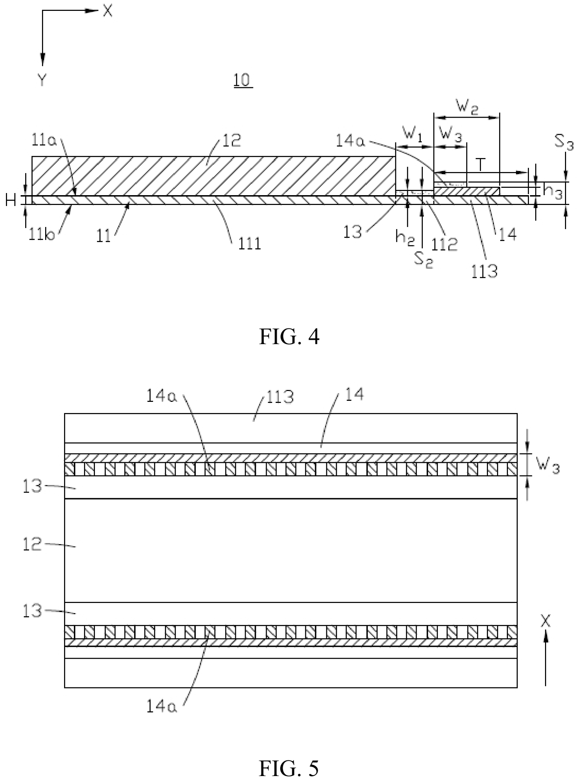

Referring to FIG. 4, FIG. 5, and FIG. 6, in an embodiment, the protection layer 13 includes a conductive undercoat. When the first electrode plate 10, the separator, and the second electrode plate are stacked or wound, the conductive undercoat is located between the separator and the composite current collector 11, and can isolate burrs on the first metal layer 114 or the second metal layer 115 of the composite current collector 11, and reduce the risk of the burrs penetrating the separator and causing a short circuit between the first electrode plate 10 and the second electrode plate.

Optionally, the conductive undercoat is made of a material including at least one of aluminum oxide, silicon oxide, silicon carbide, amorphous carbon, lithium phosphorus oxynitride, or titanium diboride. Along the second direction Y, the thickness h₂ of the conductive undercoat satisfies: 2 µm ≤ h₁ ≤ 30 µm; and the sum S₂ of the thickness of the conductive undercoat and the thickness of the composite current collector 11 satisfies: 8 µm ≤ S₂ ≤ 45 µm, thereby effectively wrapping the burrs, reducing the probability of the burrs penetrating the separator after protruding beyond the insulation layer, reducing the space occupied by the conductive undercoat along the second direction Y, and increasing the headspace of the battery cell 100. Optionally, the thickness h₂ of the conductive undercoat may be any one of 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm. Optionally, S₂ may be any one of 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, or 45 µm.

Optionally, along the second direction Y, the thickness h₂ of the conductive undercoat satisfies: 5 µm < h₂ ≤ 10 µm; and the sum S₂ of the thickness of the conductive undercoat and the thickness of the composite current collector 11 satisfies: 11 µm ≤ S₁ ≤ 25 µm, thereby further effectively wrapping the burrs, further reducing the probability of the burrs penetrating the separator after protruding beyond the insulation layer, further reducing the space occupied by the conductive undercoat along the second direction Y, and increasing the headspace of the battery cell 100. Optionally, the thickness h₂ of the conductive undercoat may be any one of 6 µm, 7 µm, 8 µm, 9 µm, or 10 µm. Optionally, S₂ may be any one of 11 µm, 12 µm, 13 µm, 14 µm, 15 µm, 16 µm, 17 µm, 18 µm, 19 µm, 20 µm, 21 µm, 22 µm, 23 µm, 24 µm, or 25 µm.

Optionally, along the second direction Y, the thickness h₂ of the conductive undercoat satisfies: 2 µm ≤ h₂ ≤ 5 µm; and the sum S₂ of the thickness of the conductive undercoat and the thickness of the composite current collector 11 satisfies: 8 µm ≤ S₂ ≤ 20 µm, thereby effectively wrapping the burrs, reducing the probability of the burrs penetrating the separator after protruding beyond the insulation layer, further reducing the space occupied by the conductive undercoat along the second direction Y, and further increasing the headspace of the battery cell 100. Optionally, the thickness h₂ of the conductive undercoat may be any one of 2 µm, 2.2 µm, 2.4 µm, 2.6 µm, 2.8 µm, 3 µm, 3.2 µm, 3.4 µm, 3.6 µm, 3.8 µm, 4 µm, 4.2 µm, 4.4 µm, 4.6, 4.8 µm, or 5 µm. Optionally, S₂ may be any one of 8 µm, 9 µm, 10 µm, 11 µm, 12 µm, 13 µm, 14 µm, 15 µm, 16 µm, 17 µm, 18 µm, 19 µm, or 20 µm.

Referring to FIG. 7, in an embodiment, the conductive undercoat is disposed between the first active material layer 12 and the composite current collector 11. The conductive undercoat is configured to improve the interface of the composite current collector 11, increase the bonding force between the composite current collector 11 and the first active material layer 12, construct a conductive network between the conductive undercoat, the first active material layer 12, and the composite current collector 11, and improve the electron transport efficiency. The resistance R of the conductive undercoat satisfies: 1 mohm ≤ R ≤ 20 mohm. Optionally, the resistance R may be any one of 1 mohm, 2 mohm, 3 mohm, 4 mohm, 5 mohm, 6 mohm, 7 mohm, 8 mohm, 9 mohm, 10 mohm, 11 mohm, 12 mohm, 13 mohm, 14 mohm, 15 mohm, 16 mohm, 17 mohm, 18 mohm, 19 mohm, or 20 mohm.

In an embodiment, the thickness h₂₁ of the conductive undercoat located between the first active material layer 12 and the composite current collector 11 satisfies: 1 µm ≤ h₂₁ ≤ 2.5 µm. A cold-pressing process may be performed to reduce the thickness of the conductive undercoat located between the first active material layer 12 and the composite current collector 11, so that the same space can accommodate more electrode plates, thereby increasing the energy density of the battery. Optionally, the thickness h₂₁ of the conductive undercoat located between the first active material layer 12 and the composite current collector 11 may be any one of 1 µm, 1.1 µm, 1.2 µm, 1.3 µm, 1.4 µm, 1.5 µm, 1.6 µm, 1.7 µm, 1.8 µm, 1.9 µm, 2.0 µm, 2.1 µm, 2.2 µm, 2.3 µm, 2.4 µm, or 2.5 µm.

Referring to FIG. 2 to FIG. 5, in an embodiment, along the first direction X, the width W₂ of the first electrical connector 14 satisfies: 3 mm ≤ W₂ ≤ 5mm, thereby reducing the space occupied by the first electrical connector 14 along the first direction X, and in turn, increasing the distance from the junction between the first electrical connector 14 and the electrode terminal 102 to the cell housing 101, increasing the headspace of the battery cell 100, and facilitating bending of the electrode terminal 102. Optionally, W₂ may be any one of 3 mm, 3.2 mm, 3.4 mm, 3.6 mm, 3.8 mm, 4 mm, 4.2 mm, 4.4 mm, 4.6 mm, 4.8 mm, or 5 mm.

In an embodiment, along the first direction X, the thickness h₃ of the first electrical connector 14 satisfies: 5 µm ≤ h₃ ≤ 20 µm, thereby reducing the space occupied by the first electrical connector 14 along the second direction Y, increasing the headspace of the battery cell 100, and facilitating bending of the electrode terminal 102. Optionally, h₃ may be any one of 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm.

Optionally, along the first direction X, the thickness h₃ of the first electrical connector 14 satisfies: 7 µm < h₃ ≤ 13 µm, thereby further reducing the space occupied by the first electrical connector 14 along the second direction Y, further increasing the headspace of the battery cell 100, and facilitating bending of the electrode terminal 102. Optionally, h₃ may be any one of 7 µm, 8 µm, 9 µm, 10 µm, 11 µm, 12 µm, or 13 µm.

Optionally, along the first direction X, the thickness h₃ of the first electrical connector 14 satisfies: 5 µm ≤ h₃ ≤ 7 µm. By further reducing the thickness h₃ of the first electrical connector 14, this application further reduces the space occupied by the first electrical connector 14 along the second direction Y, further increases the headspace of the battery cell 100, and facilitates bending of the electrode terminal 102. Optionally, h₃ may be any one of 5 µm, 5.2 µm, 5.4 µm, 5.6 µm, 5.8 µm, 6 µm, 6.2 µm, 6.4 µm, 6.6 µm, 6.8 µm, or 7 µm.

In an embodiment, the first electrical connector 14 is welded to the third section 113 to form a welding region 14a. Along the first direction X, the width W₃ of the welding region satisfies: 1.8 mm ≤ W₃ ≤ 2 mm. Because the welding region 14a needs to be avoided in a process of welding the electrode terminal 102 to the first electrical connector 14, controlling the width of the welding region to fall within the specified range can increase the space from the welding position between the electrode terminal 102 and the first electrical connector 14 to the cell housing 101 along the first direction X, thereby increasing the headspace of the battery cell 100, and facilitating bending of the electrode terminal 102. Optionally, the width W₃ of the welding region may be any one of 1.8 mm, 1.82 mm, 1.84 mm, 1.86 mm, 1.88 mm, 1.9 mm, 1.92 mm, 1.94 mm, 1.96 mm, 1.98 mm, or 2.0 mm.

Optionally, in an embodiment, along the second direction Y, the thickness S₃ of the welding region 14a satisfies: 18 µm ≤ S₃ ≤ 57 µm, thereby increasing the strength of connection between the first electrical connector 14 and the third section 113, reducing the space occupied by the welding region 14a along the second direction Y, increasing the headspace of the battery cell 100, and facilitating bending of the electrode terminal 102. Optionally, the thickness S₃ of the welding region 14a may be any one of 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 59 µm, or 57 µm. Optionally, the thickness S₃ of the welding region 14a includes the thickness of the composite current collector 11, the thickness of the first electrical connector 14, and the thickness of the weld mark in aggregate.

Optionally, along the second direction Y, the thickness S₃ of the welding region 14a satisfies: 28 µm < S₃ ≤ 47 µm, thereby further increasing the strength of connection between the first electrical connector 14 and the third section 113, reducing the space occupied by the welding region 14a along the second direction Y, increasing the headspace of the battery cell 100, and facilitating bending of the electrode terminal 102. Optionally, the thickness S₃ of the welding region 14a may be any one of 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, or 47 µm.

Optionally, along the second direction Y, the thickness S₃ of the welding region 14a satisfies: 18 µm ≤ S₃ ≤ 37 µm. By further reducing the thickness S₃ of the welding region 14a, this application can further reduce the space occupied by the welding region 14a along the second direction Y, further increase the headspace of the battery cell 100, and facilitate bending of the electrode terminal 102. Optionally, the thickness S₃ of the welding region 14a may be any one of 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, or 37 µm.

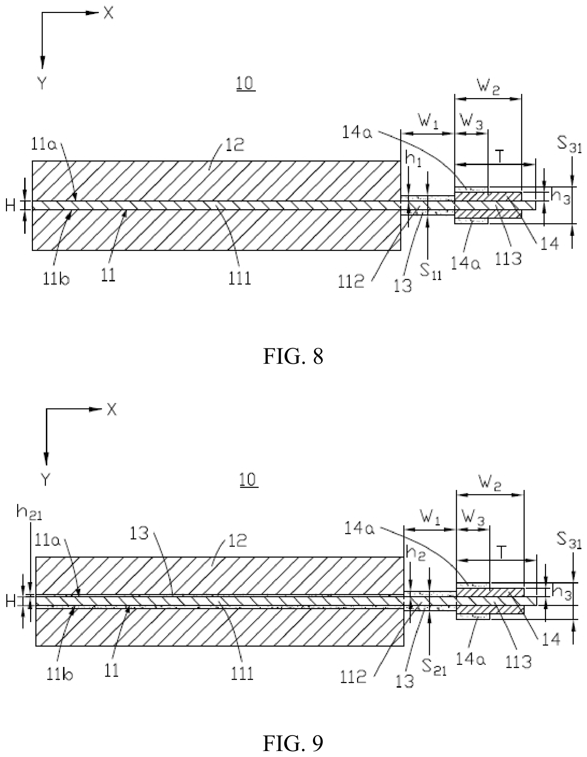

Referring to FIG. 8 and FIG. 9, in an embodiment, both sides of the first section 111 are coated with the first active material layer 12, both sides of the second section 112 are coated with the protection layer 13, and both sides of the third section 113 are fitted with the first electrical connector 14.

In an embodiment, along the first direction X, the widths of the first electrical connectors 14 on the two sides of the third section 113 may be equal or unequal.

Optionally, the electrode terminal 102 is connected to the two first electrical connectors 14 simultaneously. Optionally, the electrode terminal 102 is connected to one of the two first electrical connectors 14. Optionally, along the first direction X, the electrode terminal 102 is connected to the wider one of the two first electrical connectors 14.

In an embodiment, along the second direction Y, the thicknesses of the first electrical connectors 14 on the two sides of the third section 113 are equal.

In an embodiment, along the second direction Y, the thicknesses of the first electrical connectors 14 on the two sides of the third section 113 are not equal. On condition that the total thickness of the first electrical connectors 14 on the two sides remain the same, the thickness of the first electrical connector 14 on one side of the third section 113 may be increased to increase the welding strength, and the thickness of the first electrical connector 14 on the other side of the third section 113 may be reduced to increase the headspace of the battery cell 100.

In an embodiment, along the first direction X, a difference A in width between the protection layers 13 located on the two sides of the second section 112 satisfies: 0 ≤ A ≤ 0.4 mm. Optionally, the difference A may be any one of 0 mm, 0.1 mm, 0.2 mm, 0.3 mm, or 0.4 mm.

In an embodiment, the first electrical connectors 14 are welded to the third section 113 to form welding regions 14a on the two sides of the third section 113. Along the first direction X, a difference B in width between the welding regions 14a located on the two sides of the third section 113 satisfies: 0 ≤ B ≤ 0.25 mm. Optionally, the difference B may be any one of 0 mm, 0.05 mm, 0.1 mm, 0.15 mm, 0.2 mm, or 0.25 mm.

In an embodiment, when the protection layer 13 is an insulation layer, along the second direction Y, a sum S₁₁ of thicknesses of the insulation layers on two sides and the thickness of the composite current collector 11 satisfies: 30 µm ≤ S₁₁ ≤ 75 µm. When the composite current collector 11 is coated with the first active material layer 12 on both sides, the burrs on both sides of the composite current collector 11 can be wrapped, thereby reducing the risk of the burrs penetrating the separator, reducing the space occupied by the insulation layer along the second direction Y, increasing the headspace of the battery cell 100, and facilitating bending of the electrode terminal 102. Optionally, S₁₁ may be any one of 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm, 70 µm, 71 µm, 72 µm, 73 µm, 74 µm, or 75 µm.

Optionally, along the second direction Y, the sum S₁₁ of thicknesses of the insulation layers on two sides and the thickness of the composite current collector 11 satisfies: 36 µm ≤ S₁₁ ≤ 55 µm. When the composite current collector 11 is coated with the first active material layer 12 on both sides, the burrs on both sides of the composite current collector can be wrapped more effectively, thereby further reducing the probability of the burrs penetrating the separator after protruding beyond the insulation layer, reducing the space occupied by the insulation layer along the second direction Y, increasing the headspace of the battery cell 100, and facilitating bending of the electrode terminal 102. Optionally, S₁₁ may be any one of 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, or 55 µm.

Optionally, when the protection layer 13 is an insulation layer, along the second direction Y, the sum S₁₁ of thicknesses of the insulation layers on the two sides and the thickness of the composite current collector 11 satisfies: 30 µm ≤ S₁₁ ≤ 45 µm. When the composite current collector 11 is coated with the first active material layer 12 on both sides, the burrs on both sides of the composite current collector can be wrapped effectively, thereby reducing the probability of the burrs penetrating the separator after protruding beyond the insulation layer, further reducing the space occupied by the insulation layer along the second direction Y, further increasing the headspace of the battery cell 100, and facilitating bending of the electrode terminal 102. Optionally, S₁₁ may be any one of 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, or 45 µm.

In an embodiment, when the protection layer 13 is a conductive undercoat, along the second direction Y, the sum S₂₁ of thicknesses of the conductive undercoats on the two sides and the thickness of the composite current collector 11 satisfies: 10 µm ≤ S₂₁ ≤ 75 µm. When the composite current collector 11 is coated with the first active material layer 12 on both sides, the burrs on both sides of the composite current collector 11 can be wrapped, thereby reducing the risk of the burrs penetrating the separator, reducing the space occupied by the conductive undercoat along the second direction Y, increasing the headspace of the battery cell 100, and facilitating bending of the electrode terminal 102. Optionally, S₂₁ may be any one of 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm, 70 µm, 71 µm, 72 µm, 73 µm, 74 µm, or 75 µm.

Optionally, when the protection layer 13 is a conductive undercoat, along the second direction Y, the sum S₂₁ of thicknesses of the conductive undercoats on the two sides and the thickness of the composite current collector 11 satisfies: 16 µm ≤ S₂₁ ≤ 35 µm. When the composite current collector 11 is coated with the first active material layer 12 on both sides, the burrs on both sides of the composite current collector can be wrapped more effectively, thereby further reducing the probability of the burrs penetrating the separator after protruding beyond the insulation layer, further reducing the space occupied by the conductive undercoat along the second direction Y, increasing the headspace of the battery cell 100, and facilitating bending of the electrode terminal 102. Optionally, S₂₁ may be any one of 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, or 35 µm.

Optionally, when the protection layer 13 is a conductive undercoat, along the second direction Y, the sum S₂₁ of thicknesses of the conductive undercoats on the two sides and the thickness of the composite current collector 11 satisfies: 10 µm ≤ S₂₁ ≤ 25 µm. When the composite current collector 11 is coated with the first active material layer 12 on both sides, the burrs on both sides of the composite current collector 11 can be wrapped, thereby reducing the risk of the burrs penetrating the separator, further reducing the space occupied by the conductive undercoat along the second direction Y, further increasing the headspace of the battery cell 100, and facilitating bending of the electrode terminal 102. Optionally, S₂₁ may be any one of 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, or 25 µm.

In an embodiment, along the second direction Y, the thickness sum S₃₁ of the welding regions 14a on the two sides satisfies: 28 µm ≤ S₃₁ ≤ 67 µm, thereby increasing the strength of connection between the first electrical connector 14 and the two sides of the third section 113, reducing the space occupied by the welding regions 14a along the second direction Y, increasing the headspace of the battery cell 100, and facilitating bending of the electrode terminal 102. Optionally, the thickness S₃ of the welding region 14a may be any one of 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, or 67 µm.

Optionally, along the second direction Y, the thickness sum S₃₁ of the welding regions 14a on the two sides satisfies: 38 µm ≤ S₃₁ ≤ 57 µm, thereby further increasing the strength of connection between the first electrical connector 14 and the two sides of the third section 113, reducing the space occupied by the welding region 14a along the second direction Y, increasing the headspace of the battery cell 100, and facilitating bending of the electrode terminal 102. Optionally, the thickness S₃ of the welding region 14a may be any one of 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, or 57 µm.

Optionally, along the second direction Y, the thickness sum S₃₁ of the welding regions 14a on the two sides satisfies: 28 µm ≤ S₃₁ ≤ 47 µm. By further reducing the thickness sum S₃₁ of the welding regions 14a on the two sides, this application can further reduce the space occupied by the welding region 14a along the second direction Y, further increase the headspace of the battery cell 100, and facilitate bending of the electrode terminal 102. Optionally, the thickness S₃ of the welding region 14a may be any one of 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, or 47 µm.

In preparing a specimen, the conductive undercoat and the active material are applied onto the current collector separately. The undercoat is applied first, and then the active material is applied. The width of the conductive undercoat needs to be larger than the width of the active material layer.

The following further describes this application with reference to specific embodiments.

Each comparative embodiment and each embodiment are tested in groups, each group containing 10 battery cells.

**Table 1**

| | Thickness of composite current collector | Single-side coating thickness | Double-side coating thickness (including composite current collector) | Protection layer (width) | First electrical connector (thickness) | First electrical connector (width) | Welding region (width) | Welding region (single-side thickness) | Welding region (double-side thickness) |
|---|---|---|---|---|---|---|---|---|---|
| Comparative Embodiment 1 (insulation layer) | 8 µm | 33 µm | 71 µm | 2.8 mm | 17 µm | 3.5 mm | 2.7 mm | 47 µm | 57 µm |
| Comparative Embodiment 2 (conductive undercoat) | 8 µm | 33 µm | 71 µm | 2.6 mm | 17 µm | 4.5 mm | 2.7 mm | 47 µm | 57 µm |
| Embodiment 1 (insulation layer) | 8 µm | 14 µm | 37 µm | 1.2 mm | 6 µm | 4 mm | 1.8 mm | 27 µm | 37 µm |
| Embodiment 2 (insulation layer) | 8 µm | 17 µm | 46 µm | 1.6 mm | 10 µm | 4 mm | 1.8 mm | 38 µm | 47 µm |
| Embodiment 3 (insulation layer) | 8 µm | 25 µm | 60 µm | 2.1 mm | 17 µm | 4 mm | 1.8 mm | 47 µm | 57 µm |
| Embodiment 4 (conductive undercoat) | 8 µm | 3 µm | 17 µm | 1.2 mm | 6 µm | 4 mm | 1.8 mm | 27 µm | 37 µm |
| Embodiment 5 (conductive undercoat) | 8 µm | 7.5 µm | 25 µm | 1.7 mm | 10 µm | 4 mm | 1.8 mm | 38 µm | 47 µm |
| Embodiment 6 (conductive undercoat) | 8 µm | 20 µm | 55 µm | 2.1 mm | 17 µm | 4 mm | 1.8 mm | 47 µm | 57 µm |

**Table 2**

| | Capacity loss ratio of battery cell | Yield rate of connecting electrode terminal | Headspace loss ratio of battery cell |
|---|---|---|---|
| Comparative Embodiment 1 | 25% | 70% | 2.30% |
| Comparative Embodiment 2 | 31 | 80% | 2.60% |
| Embodiment 1 | 0% | 90% | 0.67% |
| Embodiment 2 | 0% | 87% | 0.71% |
| Embodiment 3 | 0% | 79% | 0.82% |
| Embodiment 4 | 0% | 99% | 0.23% |
| Embodiment 5 | 0% | 95% | 0.31% |
| Embodiment 6 | 0% | 92% | 0.46% |

As can be seen from Table 1 and Table 2, by reducing the width of the protection layer 13, this application reduces the headspace loss ratio of the battery cell 100; by reducing the thickness of the protection layer 13, this application facilitates welding between the first electrical connector 14 and the third section 113, increases the distance between the welding region 14a and the cell housing 101, and increases the headspace of the battery cell 100. By reducing the width and thickness of the welding region 14a, this application further increases the distance between the welding region 14a and the cell housing 101, reduces the headspace loss ratio of the battery cell 100, facilitates bending of the electrode terminal 102 after the electrode terminal 102 is welded to the first electrical connector 14, reduces the capacity loss ratio, improves the process yield rate, and facilitates production.

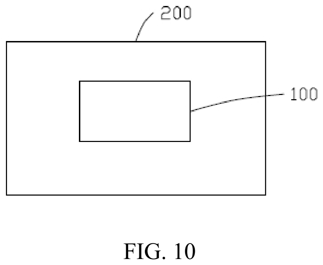

Referring to FIG. 10, this application further provides an electrical device 200 that employs the battery cell 100. In an embodiment, the electrical device 200 of this application may be, but is not limited to, an electronic device, an unmanned aerial vehicle, a backup power supply, an electric vehicle, an electric motorcycle, an electric power-assisted bicycle, an electric tool, a large household storage battery, or the like.

A person of ordinary skill in the art understands that the foregoing embodiments are merely intended to illustrate this application, but not intended to limit this application. All appropriate modifications and changes made to the embodiments without departing from the spirit and conception of this application still fall within the protection scope of this application.

## Claims

1. A battery cell, **characterized in that** the battery cell comprises a first electrode plate, and the first electrode plate comprises:
a composite current collector, wherein the composite current collector comprises a first section, a second section, and a third section arranged along a first direction, and the second section connects the first section and the third section;
a first active material layer, connected to the first section, wherein the first active material layer and the composite current collector are arranged along a second direction, and the first direction is perpendicular to the second direction;
a protection layer, connected to at least the second section to isolate burrs of the second section;
a first electrical connector, connected to the third section, wherein the first electrical connector is configured to be connected to an external electrical device;
the protection layer, the first active material layer, and the first electrical connector are disposed on a same side of the composite current collector; and
along the first direction, a width W₁ of the protection layer located on the second section satisfies: 1.0 mm ≤ W₁ ≤ 2.4 mm, and the second direction is a thickness direction of the first electrode plate.

2. The battery cell according to claim 1, **characterized in that**, along the first direction, the width W₁ of the protection layer satisfies: 1.0 mm ≤ W₁ ≤ 1.5 mm.

3. The battery cell according to claim 1, **characterized in that** the protection layer comprises an insulation layer, and, along the second direction, a thickness h₁ of the insulation layer satisfies: 12 µm ≤ h₁ ≤ 30 µm; and, along the second direction, a sum S₁ of the thickness of the insulation layer and a thickness of the composite current collector satisfies: 18 µm ≤ S₁ ≤ 45 µm.

4. The battery cell according to claim 3, wherein, along the second direction, the thickness h₁ of the insulation layer satisfies: 12 µm ≤ h₁ ≤ 15 µm, and, along the second direction, a sum S₁ of the thickness of the insulation layer and the thickness of the composite current collector satisfies: 18 µm ≤ S₁ ≤ 30 µm.

5. The battery cell according to claim 1, **characterized in that** the protection layer comprises a conductive undercoat; along the second direction, a thickness h₂ of the conductive undercoat satisfies: 2 µm ≤ h₂ ≤ 30 µm; and, along the second direction, a sum S₂ of the thickness of the conductive undercoat and a thickness of the composite current collector satisfies: 8 µm ≤ S₂ ≤ 45 µm.

6. The battery cell according to claim 5, **characterized in that**, along the second direction, the thickness h₂ of the conductive undercoat satisfies: 2 µm ≤ h₂ ≤ 5 µm; and, along the second direction, the sum S₂ of the thickness of the conductive undercoat and the thickness of the composite current collector satisfies: 8 µm ≤ S₂ ≤ 20 µm.

7. The battery cell according to claim 1, **characterized in that** along the first direction, a width W₂ of the first electrical connector satisfies: 3 mm ≤ W₂ ≤ 5mm; and, along the second direction, a thickness h₃ of the first electrical connector satisfies: 5 µm ≤ h₃ ≤ 20 µm.

8. The battery cell according to claim 1, **characterized in that** the first electrical connector is welded to the third section to form a welding region; along the first direction, a width W₃ of the welding region satisfies: 1.8 mm ≤ W₃ ≤ 2 mm; and, along the second direction, a thickness S₃ of the welding region satisfies: 18 µm ≤ S₃ ≤ 57 µm.

9. The battery cell according to claim 8, **characterized in that** along the second direction, the thickness S₃ of the welding region satisfies: 18 µm ≤ S₃ ≤ 37 µm.

10. The battery cell according to claim 1, **characterized in that**, along the second direction, both sides of the first section are coated with the first active material layer, both sides of the second section are coated with the protection layer, and both sides of the third section are fitted with the first electrical connector.

11. The battery cell according to claim 10, **characterized in that** the protection layer comprises an insulation layer, and, along the second direction, a sum S₁₁ of thicknesses of the insulation layers on two sides and a thickness of the composite current collector satisfies: 30 µm ≤ S₁₁ ≤ 75 µm.

12. The battery cell according to claim 10, **characterized in that** the protection layer comprises a conductive undercoat; and, along the second direction, a sum S₂₁ of thicknesses of the conductive undercoats on both sides and a thickness of the composite current collector satisfies: 10 µm ≤ S₂₁ ≤ 75 µm.

13. The battery cell according to claim 10, **characterized in that**, along the first direction, a difference A in width between the protection layers located on the two sides of the second section satisfies: 0 ≤ A ≤ 0.4 mm.

14. The battery cell according to claim 10, **characterized in that** the first electrical connectors disposed on the two sides of the third section are welded to the third section to form welding regions, and, along the first direction, a difference B in width between the welding regions located on the two sides of the third section satisfies: 0 ≤ B ≤ 0.25 mm.

15. The battery cell according to claim 5 or 12, **characterized in that** the conductive undercoat is further disposed between the first active material layer and the composite current collector, a resistance R of the conductive undercoat satisfies: 1 mohm ≤ R ≤ 20 mohm, and, along the second direction, a thickness h₂₁ of the conductive undercoat located between the first active material layer and the composite current collector satisfies: 1 µm ≤ h₂₁ ≤ 2.5 µm.

16. The battery cell according to claim 1, **characterized in that** along the first direction, a width T of the third section satisfies: 1 mm ≤ T ≤ 5 mm.

17. The battery cell according to claim 3, **characterized in that** the insulation layer is made of a material comprising at least one of inorganic ceramic or a non-conductive organic polymeric substance.

18. The battery cell according to claim 5 or 6, **characterized in that** the conductive undercoat is made of a material comprising at least one of aluminum oxide, silicon oxide, silicon carbide, amorphous carbon, lithium phosphorus oxynitride, or titanium diboride.

19. An electrical device, **characterized in that** the electrical device comprises the battery cell according to any one of claims 1 to 18.
